(19) Europäisches Patentamt
European Patent Office
Office européen des brevets

(11) Publication number: **0 263 127 B1**

(12) # EUROPEAN PATENT SPECIFICATION

(45) Date of publication of patent specification: **27.02.91 Bulletin 91/09**

(51) Int. Cl.⁵: **H02G 1/14, H01R 43/28**

(21) Application number: **87901740.8**

(22) Date of filing: **04.03.87**

(86) International application number:
**PCT/SE87/00106**

(87) International publication number:
**WO 87/05752 24.09.87 Gazette 87/21**

(54) **METHOD AND DEVICE TO SHAPE A BRAIDED SHEATH IN A CABLE CONSISTING OF AN OUTER COVERING, A BRAIDED SHEATH AND CONDUCTORS.**

(30) Priority: **11.03.86 SE 8601134**

(43) Date of publication of application:
**13.04.88 Bulletin 88/15**

(45) Publication of the grant of the patent:
**27.02.91 Bulletin 91/09**

(84) Designated Contracting States:
**DE FR GB**

(56) References cited:
**EP-A- 0 128 794
EP-A- 0 148 154
DE-A- 1 919 118
DE-A- 2 339 443
FR-A- 2 141 125
Derwent's abstract no 84-105788/17, SU 1029 -288-A**

(73) Proprietor: **Nokia Data Systems AB
S-163 98 Stockholm (SE)**

(72) Inventor: **SILJEKVIST, Sven, Sture
Risvinkelvägen 13
S-132 00 Saltsjö-Boo (SE)**
Inventor: **BÜHLER, Alois, Albert
Lammholmsbacken 122
S-127 43 Skärholmen (SE)**
Inventor: **HANSSON, Kjell, Olov
Malungsvägen 117
S-191 71 Sollentuna (SE)**
Inventor: **UVELIUS, Karl, Birger
Boställsvägen 23
S-216 21 Malmö (SE)**

(74) Representative: **Forssell, Gunilla et al
H. ALBIHNS PATENTBYRA AB P.O. Box 3137
S-103 62 Stockholm (SE)**

## Description

### TECHNICAL FIELD

The invention relates to a method and a device in such as telecommunication or electric power systems for the formation of the braided sheath on a cable in such a way that the sheath when mounted in such as a connection box gives good contact with the casing of the box.

### BACKGROUND ART

In previously known solutions, the braiding is undone manually into its separate wires. The wires are then put together and twisted into a thick sheath conductor. The sheath conductor is then connected to such as an electrically conducting casing with the aid of soldering or screwing.

EP-A-0 148 154 discloses a process and means for twisting the end of a braided sheath.

### DISCLOSURE OF THE INVENTION

The known method of undoing the sheath braiding into its separate wires is thus performed manually and will therefore be time- and work- consuming as well as unfavourable as far as cost is concerned. Furthermore, there is risk of the braiding wires being torn off so that a poorer contact is obtained on connecting the sheath.

The method and device which solve the problems mentioned are characterized by the claim and involve that a braided sheath in an end of a cable is exposed and compressed together into a collar-shaped portion with the aid of a device comprising a die provided with a cavity and a punch displaceable in this cavity.

The compression takes place with a force such that the wires of the braided sheath are compressed into a compact mass without damaging the conductors.

By the method and device in accordance with the invention there is obtained a collar shaped sheath part which is easy to connect and gives good contact with an electrically conducting casing. In addition, the forming process can be done by machine without risk of the sheath wires being damaged. The automatized process also results in large advantages in respect of time and cost.

### BRIEF DESCRIPTION OF DRAWINGS

The method and device in accordance with the invention will now be described in detail with the aid of an embodiment and with reference to the accompanying drawing, on which

Figure 1 illustrates the device in accordance with the invention before the braided sheath is pressed together.

Figure 2 illustrates the braided sheath compressed into a collar in accordance with the invention.

Figure 3 is a perspective view of the compressed braided sheath and

Figure 4 is an example of how to connect the braided sheath to an electrically conducting casing in a connection device.

### BEST MODE FOR CARRYING OUT THE INVENTION

The embodiment describes a method and a device for shaping a braided sheath associated with a cable. The exemplified cable is a telephony cable comprising insulated conductors surrounded by a braided sheath and an outer covering. The cable may be a connection between two terminals in a computer system, for example.

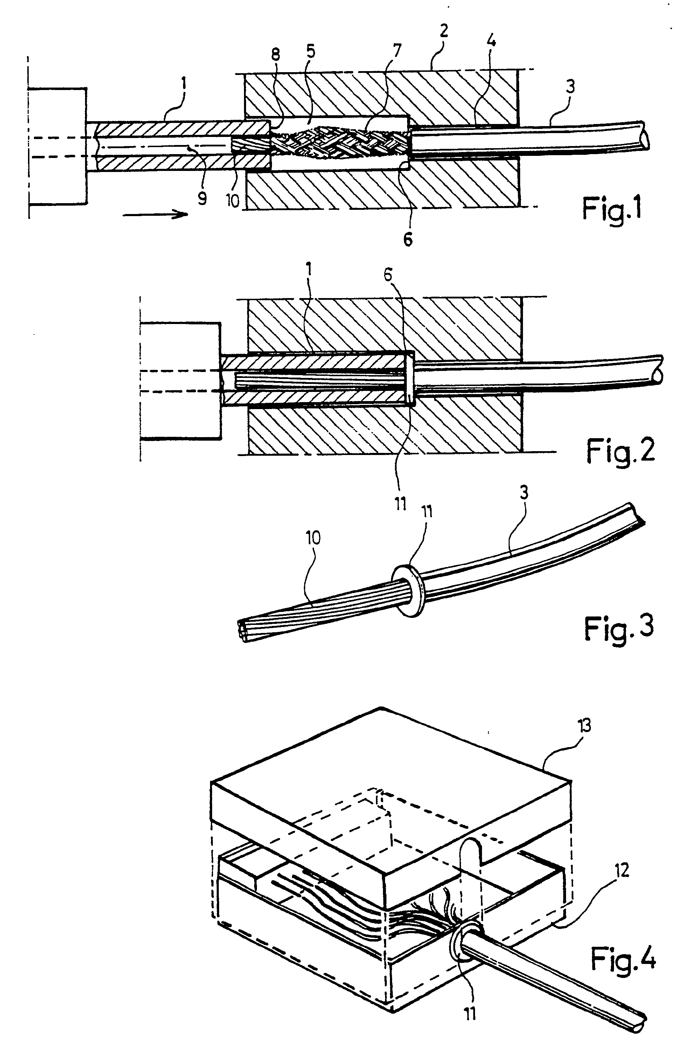

As will be seen from Figure 1, a device in accordance with the invention comprises a punch 1 and a die 2, there being a cable 3 accommodated in a through-hole in the die.

A first space 4 of this hole has a diameter somewhat larger than that of the cable to allow its insertion. A second space 5 in the through-hole has a diameter which is larger than the diameter of the first space 4. The junction between the first space 4 and the second space 5 is taking place along a shoulder 6 having a flat surface which, according to the example, is at right angles to said through hole.

It is of course possible for the shoulder 6 to have another angle in relation to said through-hole.

The cable 3 placed in the hole is in that part comprising said second space 5 removed from its covering so that the braided sheath 7 is exposed.

The punch 1, which has a cylindrical shape and a flat end surface 8, is intended to glide into said second space 5. In its longitudinal direction the punch 1 has a central hole 9 with a diameter at least corresponding to the total diameter of the conductors 10 without the sheath.

An operational sequence in accordance with the invention will now be described with reference to Figure 1, which shows how the cable with its covering removed is placed in the die 2 and how the punch 1 of the device is moved into the second part 5 of the die simultaneously as the conductors 10, being liberated from the sheath, glide into the central hole 9 of the punch. The punch 1 presses the sheath 7 against the shoulder 6 of the die under great pressure, the wires of the sheath thus metallically "floating" together to form a compact collar-shaped portion 11, as will be seen in Figure 2, which illustrates how the punch 1 has pressed the sheath against the shoulder 6.

Figure 3 illustrates the cable end 3 in perspective with the sheath compressed into a compact collar-shaped portion 11 with the exposed conductors 10.

Figure 4 illustrates an application where the sheath pressed into a collar 11 is connected to an electrically conducting casing in a connection device. The casing consists of two parts, one part formed as a box 12 with edges, and the other part formed as a cover 13, which surrounds the edges of the box. In one of the sides of the casing there is a hole through which the cable can be inserted. The collar-shaped sheath connects to the casing by being placed between the edge of the box and the side of the cover.

A braided sheath formed in accordance with the invention may of course be connected to an electrically conducting casing in other applications than in the one described above.

The punch of the device can be formed to prevent the sheath from being pressed into the cable during compression. One embodiment is to provide the flat end of the punch with a projecting circular lip round the opening of the central hole. The lip glides between the cable conductors and the sheath during compression. Another embodiment is to provide the flat end of the punch with a protruding tube round the opening of the central hole such that during compression this tube is thrust in between the sheath and the cable conductors.

It is also possible to vary the shape of the collar, such as to be round, oval, rectangular, swollen etc, by giving the die and the punch, respectively, a configuration such as to agree with the desired collar shape.

## Claims

1. A method to shape a braided sheath in a cable consisting of an outer covering, a braided sheath and conductors, characterized in that the outer covering in the end of the cable (3) is removed and that a braided sheath (7) thus being exposed is compressed into a compact collar shaped portion (11).

2. Device for carrying out the method as claimed in claim 1 to shape a braided sheath in a cable consisting of an outer covering, a braided sheath and conductors, characterized by a die (2) with a through-hole having in a first part of its length a first space (4) with an inner diameter corresponding to the outer diameter of the cable (3) for enabling passage of the cable, and in an adjacent second part of its length having a second space (5) with an inner diameter greater than the inner diameter of said first space (4), in that a pressure means is a punch (1) with an outer diameter such that it can glide into said second space (5), in that said punch (1) has a central hole (9) in which the conductors (10) liberated from the sheath (7) can glide, and in that said punch (1) on its movement into said second space (5) presses the sheath against a shoulder (6) in the passage between said first space (4) and said second space (5).

3. Device as claimed in claim 2, characterized in that said punch (1) is provided at its end with a circular lip which during compression of the sheath (7) is inserted between the sheath and the conductors (10) of the cable such as to prevent the sheath from being pressed into the conductors.

4. Device as claimed in claim 2, characterized in that said punch (1) is provided at its end with a tube, which during compression of the sheath is inserted between the sheath (7) and the conductors (10) of the cable such as to prevent the sheath from being pressed into the conductors.

## Ansprüche

1. Verfahren zum Formen einer geflochtenen Hülle in einem Kabel, das aus einer äußeren Abdeckung, einer geflochtenen Hülle und Leitern besteht, dadurch gekennzeichnet, daß die äußere Abdeckung in dem Ende des Kabels (3) entfernt wird und daß eine derart freigelegte geflochtene Hülle in einen kompakten kragenförmigen Abschnitt (11) komprimiert wird.

2. Gerät zum Durchführen des Verfahrens nach Anspruch 1 zur Formung einer geflochtenen Hülle in einem Kabel, das aus einer äußeren Abdeckung, einer geflochtenen Hülle und Leitern besteht, gekennzeichnet durch eine Form (2) mit einem durchgehenden Loch, das in einem ersten Teil seiner Länge einen ersten Raum (4) mit einem inneren Durchmesser, der dem äußeren Durchmesser des Kabels (3) entspricht, zur Ermöglichung des Durchgangs des Kabels, und in einem benachbarten zweiten Teil seiner Länge einen zweiten Raum (5) mit einem inneren Durchmesser aufweist, der größer als der innere Durchmesser des ersten Raums (4) ist, daß ein Druckmittel ein Stempel (1) mit einem derartigen äußeren Durchmesser ist, daß er in den zweiten Raum (5) gleiten kann, daß der Stempel (1) ein zentrales Loch (9) aufweist, in dem die von der Hülle (7) befreiten Leiter (10) gleiten können, und daß der Stempel (1) bei seiner Bewegung in den zweiten Raum (5) die Hülle gegen eine Schulter (6) in dem Durchgang zwischen dem ersten Raum (4) und dem zweiten Raum (5) preßt.

3. Gerät nach Anspruch 2, dadurch gekennzeichnet, daß der Stempel (1) an seinem Ende mit einer ringförmigen Lippe versehen ist, die während der Kompression der Hülle (7) zwischen die Hülle und die Leiter (10) des Kabels eingesetzt wird, um die Hülle daran zu hindern, in die Leiter gepreßt zu werden.

4. Gerät nach Anspruch 2, dadurch gekennzeichnet, daß der Stempel (1) an seinem Ende mit einem Rohr versehen ist, das während der Kompression der Hülle zwischen die Hülle (7) und die Leiter (10) des Kabels eingesetzt wird, um die Hülle daran zu hindern, in die Leiter gepreßt zu werden.

# Revendications

1. Procédé pour former une gaine tressée dans un câble constitué par un revêtement extérieur, une gaine tressée et des conducteurs, caractérisé en ce que le revêtement extérieur est enlevé sur l'extrémité du câble (3) et que la gaine tressée (7) ainsi exposée est comprimée en une portion en forme de collier compact (11).

2. Dispositif pour mettre en oeuvre le procédé de la revendication 1 pour former une gaine tressée dans un câble constitué par un revêtement extérieur, une gaine tressée et des conducteurs, caractérisé en ce qu'une matrice (2) comporte un trou traversant ayant, dans une première partie de sa longueur, un premier espace (4) dont le diamètre intérieur correspond au diamètre extérieur du câble (3) pour permettre le passage du câble et, dans une deuxième partie adjacente de sa longueur, un deuxième espace (5) avec un diamètre intérieur supérieur au diamètre intérieur du premier espace (4), en ce qu'on prévoit un organe de pression sous la forme d'un poinçon (1) avec un diamètre extérieur tel qu'il peut glisser dans le deuxième espace (5), en ce que le poinçon (1) a un trou central (9) dans lequel peuvent glisser les conducteurs (10) dépouillés de la gaine (7) et en ce que, lors de son mouvement dans le deuxième espace (5), le poinçon (1) comprime la gaine contre un épaulement (6) au niveau de la transition entre le premier espace (4) et le deuxième espace (5).

3. Dispositif selon la revendication 2, caractérisé en ce que le poinçon (1) comporte à son extrémité une lèvre circulaire gui, lors de la compression de la gaine (7), est introduite entre la gaine et les conducteurs (10) du câble, de façon à empêcher la gaine d'être pressée dans les conducteurs.

4. Dispositif selon la revendication 2, caractérisé en ce que le poinçon (1) comporte, à son extrémité, un tube qui, lors de la compression de la gaine, est introduit entre la gaine (7) et les conducteurs (10) du câble de façon à empêcher la gaine d'être pressée dans les conducteurs.

Fig.1

Fig.2

Fig.3

Fig.4